(19) Europäisches Patentamt
European Patent Office
Office européen des brevets

(11) Veröffentlichungsnummer: **0 442 399 B1**

# (12) EUROPÄISCHE PATENTSCHRIFT

(45) Veröffentlichungstag der Patentschrift: **10.05.95**

(51) Int. Cl.$^6$: **C08G 69/32**, C08J 5/18, D01F 6/60

(21) Anmeldenummer: **91101827.3**

(22) Anmeldetag: **09.02.91**

Die Akte enthält technische Angaben, die nach dem Eingang der Anmeldung eingereicht wurden und die nicht in dieser Patentschrift enthalten sind.

## (54) Vollaromatische Polyamide, Verfahren zu ihrer Herstellung und daraus geformte Gebilde.

(30) Priorität: **15.02.90 DE 4004652**

(43) Veröffentlichungstag der Anmeldung:
**21.08.91 Patentblatt 91/34**

(45) Bekanntmachung des Hinweises auf die Patenterteilung:
**10.05.95 Patentblatt 95/19**

(84) Benannte Vertragsstaaten:
**AT BE CH DE DK ES FR GB GR IT LI LU NL SE**

(56) Entgegenhaltungen:
**DE-A- 3 835 419**
**US-A- 4 471 110**
**US-A- 4 966 955**

(73) Patentinhaber: **HOECHST AKTIENGESELLSCHAFT**

**D-65926 Frankfurt (DE)**

(72) Erfinder: **Keil, Günter, Dr.**
**Frankfurter Strasse 60**
**W-6238 Hofheim am Taunus (DE)**
Erfinder: **Hess, Reiner, Dr.**
**Lärchenstrasse 4**
**W-6200 Wiesbaden (DE)**
Erfinder: **Rapp, Jochen, Dr.**
**Ouerstrasse 6**
**W-6000 Frankfurt am Main (DE)**

EP 0 442 399 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, vollaromatische Polyamide des Dicarbonsäure-Diamin-Typs, die aus ihren Lösungen in organischen Lösemitteln versponnen werden können sowie daraus hergestellte geformte Gebilde wie Fäden, Fasern, Faserpulp, Filme, Folien und Membrane mit sehr hohem Anfangsmodul (Elastizitätsmodul) sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Die Herstellung der dafür benötigten Polymere erfolgt am günstigsten in bekannter Weise durch Umsetzung von aromatischen Diaminen mit aromatischen Dicarbonsäuredichloriden in aprotischen organischen Lösungsmitteln vom Amid-Typ (N,N-Dimethylacetamid, N-Methylpyrrolidon, N,N,N',N'-Tetramethylharnstoff und dgl.) - gegebenenfalls in Gegenwart von Calcium- oder Lithiumhalogeniden und Neutralisation des gebildeten Chlorwasserstoffs, beispielsweise mit Calciumoxid.

Polyaramide mit hoher Festigkeit und hohem Anfangsmodul sind solche, bei denen die Amidbindungen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der schlechten Löslichkeit in polaren organischen Lösungsmitteln - und zwar auch in Gegenwart von anorganischen Salzen wie Calciumchlorid oder Lithiumchlorid als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurde beispielsweise in der DE-A-21 44 126 die Herstellung von löslichen aromatischen Polyamiden mit hohem Elastizitätsmodul beschrieben, wonach substituierte 3-(p-Aminophenoxy)-4-aminobenzanilide mit Terephthaloylchlorid gut lösliche Polyamide liefern, welche sich zu Filamenten von guten Festigkeiten und Anfangsmoduli verspinnen und verstrecken lassen.

Die erhöhte Löslichkeit wird hier durch die meta-Orientierung und das Sauerstoffbrückenatom verursacht.

In der Deutschen Patentschrift 25 56 883 und in der DE-A-30 07 063 werden Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und mittelhohe Moduli. Nachteilig bei den beiden vorgenannten Verfahren ist, daß die benötigten unsymmetrischen Diamine nur in sehr aufwendigen Verfahren hergestellt und gereinigt werden können.

Aus diesem Grund werden in DE-A-35 10 655 und 36 05 394, in EP-A-0 199 090 bzw. in US-A-4 847 354 Terephthalamide mit 3 Diaminkomponenten in bestimmten, definierten Anteilen beschrieben, die in Amid-Lösungsmitteln gut löslich sind und durch Verformung Fäden oder Folien mit sehr guten Festigkeiten und Moduli liefern.

Wegen des Gehaltes an nicht-aromatischen Kettenbestandteilen, wie -O- oder $-CH_2$-Gruppen sind die in den letztgenannten Schriften beschriebenen Moduli für bestimmte Anwendungszwecke noch nicht ausreichend hoch.

Fäden aus dem oben erwähnten, in der deutschen Patentschrift 22 19 703 beschriebenen Poly-(p-phenylenterephthalamid) erlangen erst nach einer aufwendigen thermischen Nachbehandlung Moduli bis 99 N/tex (vgl. auch US-A-37 67 756, Spalte 11 bzw. DPS 22 19 703, Seite 14).

Deshalb wurde auch bereits Terepthalamide aus Gemischen von drei aromatischen Diaminen ohne nicht-aromatische Kettenbestandteile vorgeschlagen, die Filamente mit hohen Festigkeiten und sehr hohen Moduli liefern. (DE-A-38 35 405, 38 35 419 und 38 35 441).

Nachteilig bei diesen Produkten ist, daß sie nicht sehr gut in den Amid-Lösungsmitteln löslich sind und daß demzufolge die Lösungen bei geringfügigem Erkalten - z.B. in kalten Anlageteilen - infolge Unterschreitens der Löslichkeitsgrenze inhomogen werden. Außerdem ist meist zur Verbesserung der Löslichkeit zusätzliches - d.h. über das bei der Neutralisation entstehende Salz hinaus - Salz erforderlich, was intensive Waschprozesse an den Filamenten erfordert.

Der vorliegenden Erfindung liegt daher die Aufgabe zugrunde, solche aromatischen Copolyamide zu finden, die sich unter Verwendung von Amidlösungsmitteln in geformte Gebilde überführen lassen, die sich dann durch eine Reihe von physikalischen Eigenschaften auszeichnen. Bei der Herstellung von Fäden und Fasern sollen nach entsprechenden Verstreckungsvorgängen insbesondere hohe Festigkeiten und sehr hohe Anfangsmoduli erzielbar sein. Die für die Herstellung der Copolyamide benötigten Monomere sollen gut zugänglich sein, die durch die Polykondensation erhaltenen Polymerlösungen sollen nach einem Filtrationsprozeß und einer entsprechenden Entgasung direkt spinnbar bzw. formbar sein.

Es gelang nun, neuartige aromatische Copolyamide zu finden, die überwiegend aus para-substituierten aromatischen Kettenbestandteilen bestehen und trotzdem in Amid-Lösungsmitteln gut löslich sind - und zwar vorwiegend ohne zusätzliches Salz - und die sich aus diesen Lösungen zu geformten Gebilden wie Fäden, Fasern, Faserpulp und Folien verarbeiten lassen. Diesen neuartigen Copolyamiden ist gemeinsam, daß sie Alkylsulfonylgruppen als löslichkeitserhöhende Seitengruppen enthalten.

Diese erfindungsgemäßen Copolyamide weisen zu mindestens 95 Mol-% - vorzugsweise 100 Mol-% - die folgenden wiederkehrenden, ausschließlich paragebundene Struktureinheiten auf:
wobei die Struktureinheit A stets vorhanden ist und eine Auswahl von maximal 3 der Sturktureinheiten B, C, D und E:

A: -OC-Ar-CO-

B: -NH-Ar'-NH-

C:

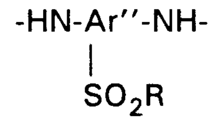

D:

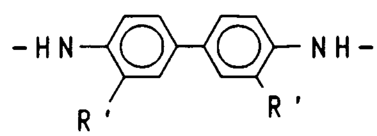

E:

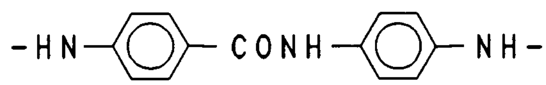

und gegebenenfalls bis zu 5 Mol-% m-Bindungen enthaltende, von aromatischen Dicarbonsäuren (F') und/oder von aromatischen Diaminen (G') abgeleiteten Struktureinheiten F und/oder G auf, wobei die Summe der Molanteile der Struktureinheiten A + F und die Summe der Molanteile der Struktureinheiten aus B, C, D, E und G im wesentlichen gleich groß sind.

In diesen Formeln bedeuten

-Ar- ein zweiwertiger aromatischer Rest, dessen C-N-Valenzbindungen in para- oder vergleichbarer koaxialer oder paralleler Stellung stehen und der durch einen oder zwei Alkylreste mit 1-4 C-Atomen oder Halogen substituiert sein kann,

-Ar'- ein zweiwertiger ein- oder zweikerniger kondensierter aromatischer Rest, dessen C-N-Valenzbindungen in para- oder vergleichbarer koaxialer oder paralleler Stellung stehen und der durch einen oder zwei Alkylreste mit 1-4 C-Atomen oder durch Halogen substituiert sein kann,

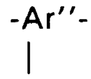

ein dreiwertiger aromatischer Rest ist, der nach Entfernung des $-SO_2R$ Restes dieselbe Bedeutung hat wie -Ar- oder -Ar'-, oder aber aus

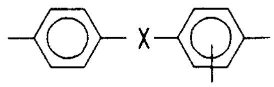

besteht, wobei X = -O-, -NHCO-, $-SO_2-$ oder -CO-bedeuten und
-R bedeutet einen Alkylrest mit 1-4 C-Atomen und
-R' bedeutet einen Alkyl- oder Alkoxyrest mit 1-4 C-Atomen.

Die niederen Alkyl- und Alkoxyreste weisen Kohlenstoffketten mit 1 bis 4 Kohlenstoffatomen auf, die vorzugsweise geradkettig sind.

Für -Ar- stehende zweiwertige aromatische Reste, bei denen die Valenzbindungen in para- oder vergleichbarer koaxialer oder paralleler Stellung stehen, sind ein- oder zweikernige kondensierte aromatische Reste wie z.B. Phenylen-1,4, Naphthylen-1,4, Naphthylen-1,5, Naphthylen-2,6 und 1,4-Diphenylen.

Für -Ar'- stehende zweiwertige aromatische Reste, bei denen die Valenzbindungen in para- oder vergleichbarer koaxialer oder paralleler Stellung stehen sind ein- oder zweikernige kondensierte aromatische Reste wie z.B. Phenylen-1,4, Naphthylen-1,4, Naphthylen-1,5 und Naphthylen-2,6. Bevorzugt für -Ar- und -Ar'- ist Phenylen-1,4.

Die Reste -Ar- und -Ar'- können ein- oder zweifach durch Niederalkylreste, das sind geradkettige oder verzweigte Alkylreste mit 1 bis 4 C-Atomen, oder durch Halogen, insbesondere durch F, Cl oder Br substituiert sein.

Bevorzugte Alkylsubstituenten sind geradkettig und insbesondere kommen Methyl und Ethyl in Betracht. Bevorzugter Halogensubstituent ist Chlor.

Die erfindungsgemäßen Polyamide können die unsubstituierten Reste -Ar- und -Ar'- und die alkyl- und/oder halogensubstituierten Reste -Ar- und -Ar'- nebeneinander in wechselnden Anteilen enthalten.

Dabei kann das Polyamid eine Art oder mehrere Arten substituierter Reste -Ar- und -Ar'- enthalten; z.B. kann es ausschließlich methylsubstituierte -Ar- und/oder -Ar'-Reste oder es kann Anteile von -Ar- und/oder -Ar'-Resten mit verschiedenen Alkylsubstituenten und/oder mit Halogensubstituenten enthalten.

Die erfindungsgemäßen Polyamide können aber auch ausschließlich unsubstituierte oder substituierte Reste -Ar- und -Ar'- enthalten. Aus Kostengründen sind solche erfindungsgemäßen Polyamide bevorzugt, die nur unsubstituierte oder die bis zu ca. 30 Mol-% substituierte Reste-Ar- und -Ar'- enthalten.

Für

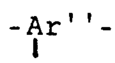

stehende dreiwertige aromatische Reste, bei denen die C-N-Valenzbindungen in para- oder vergleichbarer koaxialer oder paralleler Stellung stehen sind ein- oder zweikernige kondensierte aromatische Reste wie z.B. Phenylen-1,4, Naphthylen-1,4, Naphthylen-1,5 und Naphthylen-2,6, bei denen die Sulfoalkylgruppe irgend eine andere freie Position einnimmt - oder aber Systeme der Struktur

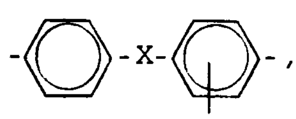

wobei X = -O-; -NHCO-; $-SO_2-$ oder -CO-bedeutet.

Beispiele für

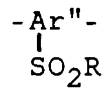

sind:

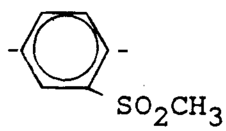

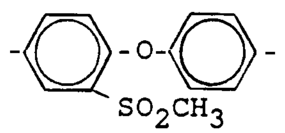

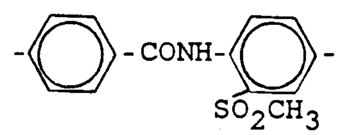

Die entsprechenden Diamine sind

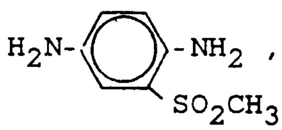

,

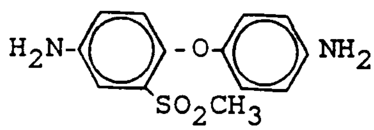

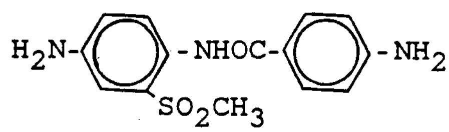

I II III

I kann hergestellt werden aus 1-Chlor-2-methylsulfonyl-4-nitro-benzol, das mit wässrigem $NH_3$ zu 1-Amino-2-methylsulfonyl-4-nitrobenzol umgesetzt (vgl. Dickey et al., Ind. eng. Chem. 45 (1953), 1730, 1733) und anschließend zu I hydriert wird.

II kann hergestellt werden durch Umsetzung von 1-Chlor-2-methansulfonyl-4-nitrobenzol mit 4-Nitrophenol oder 4-Aminophenol und anschließende Hydrierung.

Eine Herstellungsmöglichkeit von III ist die Umsetzung von 1-Amino-2-methylsulfonyl-4-nitro-benzol mit 4-Nitrobenzoylchlorid und anschließende Hydrierung.

Obwohl diese Alkylsulfonylgruppen nicht Bestandteile der Polymer-Hauptkette, sondern Seitenkettengruppen sind, sinkt nach unseren Beobachtungen innerhalb einer Serie mit gleichen Monomeren mit höherem Alkylsulfonylanteil der Anfangsmodul der Filamente so daß ein Kompromiß zwischen Löslichkeit und Modul gefunden werden muß.

Niedere Alkylreste für die -R stehen kann, sind geradkettig oder verzweigt und haben 1-4 C-Atome. Bevorzugt steht -R für geradkettige Reste und insbesondere für Reste mit 1-2 C-Atomen. Besonders bevorzugt steht -R für Methyl.

Besonders bevorzugte für -R' stehende Reste sind Methyl und Methoxy.

Die erfindungsgemäßen Copolyamide enthalten neben den möglichen Komponenten ∓ und/oder G insgesamt nur 4 Komponenten - und zwar:

A + B + C + D
A + C + D + E,

d.h. sie enthalten nur drei oder gegebenenfalls vier Aminkomponenten und zwar C und D in Kombination entweder mit B oder mit E gegebenenfalls in Kombination mit G.

Die von den in das Polyamid einkondensierten Diaminen stammenden Struktureinheiten B, C, D und E sind in der erfindungsgemäßen aromatischen Polyamiden, nur in den folgenden bestimmten Molprozentbereichen enthalten (bezogen auf die Gesamtmenge der Diaminkomponenten):

B: 25-47,5 Mol-% - vorzugsweise 25-30 Mol-%
C: 7,5-30 Mol-% - vorzugsweise 10-25 Mol-%
D: 45-67,5 Mol-% - vorzugsweise 50-65 Mol-%
E: 20-40 Mol-% - vorzugsweise 25-37,5 Mol-%

Neben den Struktureinheiten mit paraständigen oder vergleichbaren, koaxial oder parallel entgegengesetzt gerichteten Bindungen können die erfindungsgemäßen Polyamide bis zu 5 Mol-%, bezogen auf alle

Struktureinheiten, m-Bindungen enthaltende Struktureinheiten F und G aufweisen.

m-Bindungen enthaltende Struktureinheiten F und G im Sinne der vorliegenden Erfindung sind solche, die einen aromatischen Kern enthalten, dessen in der Kette des Polymermoleküls liegende Bindungen zueinander in m-Stellung stehen.

Solche Struktureinheiten sind z.B. die Reste von Isophthalsäure, m-Phenylendiamin, 3,4'-Diaminodiphenyl oder deren Alkyl- und/oder Alkoxysubstitutionsprodukten, oder 3,4'- oder 3',4-Diaminobenzanilid.

Es ist für den Fachmann selbstverständlich, daß die Summe aller von aromatischen Säuren abgeleiteten Struktureinheiten (A + F) und die Summe aller von aromatischen Aminen B, C, D, E und G abgeleiteten Struktureinheiten im wesentlichen gleich sind, d.h., daß sie sich maximal um ca. 1 % vorzugsweise maximal um 0,2 % unterscheiden, insbesondere im Rahmen der praktischen Meß- und Dosierungsmöglichkeiten gleich sind.

Die erfindungsgemäßen aromatischen Polyamide sind in organischen aprotischen polaren Lösungsmitteln löslich und lassen sich aus diesen Lösungen direkt zu geformten Gebilden verarbeiten.

Die dabei erhaltenen Gebilde zeichnen sich durch eine Kombination sehr guter technologischer Eigenschaften aus.

Diese in Verbindung mit der guten Löslichkeit in organischen Lösemitteln und der daraus resultierenden ökonomisch und ökologisch vorteilhaften Verarbeitungsmöglichkeit stellt eine überaus wertvolle Bereicherung der Technik auf dem Gebiet vollaromatischer Polyamide dar.

Die ausgezeichneten technologischen Eigenschaften der erfindungsgemäßen geformten Gebilde beruhen auf dem Einbau der Aminbausteine B, C, D und E innerhalb der oben angegebenen Grenzen. Wie aus den weiter unten beschriebenen Vergleichsversuchen ersichtlich ist, fallen die technologischen Eigenschaften außerhalb der beanspruchten Monomerkombinationen und außerhalb der beanspruchten prozentualen Anteile stark ab.

Aromatische Polyaramide mit einzelnen der Aminkomponenten B, D und E sind allgemein bekannt.

So ist es bekannt, Terephthalsäure- und p-Phenylendiamin-Reste für Polyamide einzusetzen, z.B. aus der oben zitierten deutschen Patentschrift 22 19 703. Diese Produkte sind in Amid-Lösungsmitteln praktisch nicht mehr löslich.

Die Verwendung von Benzidinen und von 4,4'-Diaminobenzanilid als Aramidkomponente ist bekannt.

Eine Verwendung von alkylsulfonylgruppenhaltigen aromatischen Diaminen (C') zur Erhöhung der Löslichkeit von ausschließlich aus paragebundenen Diaminen aufgebauten Poylaramiden ist uns jedoch bisher nicht bekannt geworden.

Wie sich aus den oben genannten Druckschriften ergibt, sind die betreffenden Polyamide in Amidlösungsmitteln meist unlöslich, oder aber die aus organischen Lösungsmitteln gesponnenen Filamente weisen nur mäßige Eigenschaften auf.

Dagegen sind die Polyamide der vorliegenden Erfindung, die durch Verwendung von Gemischen der Aminkomponenten B + C + D oder C + D + E innerhalb bestimmter Konzentrationsbereiche hergestellt wurden, überraschenderweise in Amid-Lösungsmitteln löslich - meist ohne Salzzusatz! Die daraus ersponnenen Filamente weisen hohe Festigkeit und einen sehr hohen Anfgangsmodul auf!

Die Herstellung der erfindungsgemaßen aromatischen Polyamide erfolgt durch Lösungskondensation von aromatischen Dicarbonsäuredichloriden mit dazu äquivalenten Mengen von Mischungen aus aromatischen Diaminen in bekannten Polyamid-Lösemitteln, d.h. in aprotischen, polaren Lösungsmitteln vom Amidtyp, wie z.B. in N,N-Dimethylacetamid, Tetramethylharnstoff oder insbesondere in N-Methyl-2-pyrrolidon. Meist ist zusätzliches Salz ($CaCl_2$, LiCl) nicht erforderlich!

Die Polykondensationstemperaturen liegen üblicherweise zwischen -20 °C und +120 °C, bevorzugt zwischen +10 °C und +100 °C. Besonders gute Ergebnisse werden bei Reaktionstemperaturen zwischen +10 °C und +80 °C erzielt. Die Polykondensationsreaktionen werden vorzugsweise so ausgeführt, daß nach Abschluß der Reaktion 2 bis 15, vorzugsweise 5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an. Gegenbenenfalls wird das Kettenwachstum durch Zugabe eines monofunktionellen Säurechlorids - z.B. Acetylchlorid - gestoppt.

Eine ausreichende Molekül-Kettenlänge ist erreicht, wenn die Viskosität der bei der Polykondensation erhaltenen Polymerlösung einer inhärenten Viskosität des Polymers von ca. 4,5 bis 7,5 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wurde für die Zwecke der vorliegenden Erfindung bestimmt an Lösungen von jeweils 0,5 g Polymer in 100 ml 98-Gew.%iger Schwefelsäure bei 25 °C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung. Dieses erfindungsgemäße Verfahren ist dadurch gekennzeichnet, daß man 95 bis 100 Mol-% Dicarbonsäure-dichloride der Formel

Cl-OC-Ar-CO-Cl (A')

und 0 bis 5 Mol% m-Bindungen enthaltende Dichloride aromatischer Dicarbonsäuren (F') mit einer äquivalenten Menge einer Diaminmischung, die sich zusammensetzt aus 95-100 Mol-% eines Gemisches von Diaminen, bestehend aus 25-47,5 Mol-%, vorzugsweise 25-30 Mol-% von Diaminen der Formel

$H_2N-Ar'-NH_2$ (B')

7,5-30 Mol-%, vorzugsweise 10-25 Mol-% von Diaminen der Formel

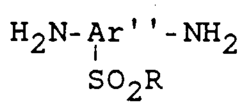

(C')

45-67,5 Mol-%, vorzugsweise 50-65 Mol-% von Diaminen der Formel

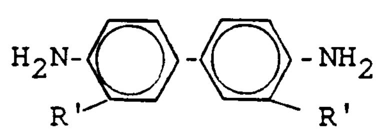

(D')

20-40 Mol-%, vorzugsweise 25-37,5 Mol-% von 4,4'-Diaminobenzanilid (E')

und aus 0 bis 5 Mol-% von m-Bindungen enthaltenden aromatischen Diaminen (G') in der angegebenen Weise miteinander umsetzt.

m-Bindungen enthaltende aromatische Dicarbonsäuredichloride und aromatische Diamine im Sinne der vorliegenden Erfindung sind solche, bei denen die Richtungen der Bindungen der beiden Carbonsäurechloridgruppen bzw. der beiden Aminogruppen miteinander einen Winkel bilden, der dem von m-Bindungen entspricht. Solche Dicarbonsäure-dichloride bzw. Diamine sind z.B. Isophthalsäure-dichlorid, m-Phenylendiamin, 3,4'-Diaminodiphenyl oder deren Alkyl- und/oder Alkoxysubstitutionsprodukte, oder 3,4'- oder 3',4-Diaminobenzanilid.

Bei dieser Arbeitsweise bleiben die erhaltenen erfindungsgemäßen Polyamide im Lösungsmittel gelöst.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend wird der entstandene und locker an das Amidlösungsmittel gebundene Chlorwasserstoff neutralisiert durch Zugabe basischer Substanzen. Geeignet sind dafür beispielsweise Lithiumhydroxyd, Calciumhydroxyd, insbesondere aber Calciumoxid.

Zur Herstellung von geformten Gebilden aus den erfindungsgemäßen Polyamiden werden die erhaltenen neutralisierten Lösungen der erfindungsgemäßen Polyamide filtriert, entgast und in bekannter Weise zu

Fäden, Fasern, Faserpulp, Filmen oder auch Folien, die ebenfalls ein Gegenstand der Erfindung sind, weiterverarbeitet. Dies kann beispielweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eignen sich wäßrige Lösungen des gleichen Amidlösungsmittels, das auch zur Polymerherstellung Verwendung gefunden hat. Es sind aber auch wäßrige Salzlösungen wie z.B. Calciumchloridlösungen verwendbar.

Beim Extrudieren der Polymerlösungen und beim Abzug der geformten Gebilde wie Filamente oder Folien aus dem Fällbad tritt nur eine relativ geringe Naßverstreckung dieser Gebilde ein. Die aus den Fällbädern abgezogenen Gebilde müssen daher nach dem üblichen Waschen und Trocknen einer weiteren Verstreckung unterzogen werden um ihnen die gewünschten mechanischen Eigenschaften, wie hohen Elastizitätsmodul und hohe Reißfestigkeit, zu vermitteln.

Bei der Herstellung der erfindungsgemäßen Fäden und Fasern sowie Folien setzt sich demnach die Gesamtverstreckung zusammen aus einer geringen Naßverstreckung und einer anschließenden höheren Verstreckung. Diese wird in der Regel in üblicher Weise bei erhöhter Temperatur auf Streckwerken ausgeführt, in denen zwischen mit unterschiedlicher Umfangsgeschwindigkeit laufenden Galetten eine ein- oder mehrstufige Verstreckung erfolgt.

Um die Filamente auf die erforderliche Verstrecktemperatur zu erwärmen kann eine Kontaktverstrekkung durchgeführt werden, wobei die Filamente über im Streckbereich des Streckwerkes angebrachte heiße Platten ("Bügeleisen") gezogen werden, die Oberflächentemperaturen von 280 °C bis 470 °C, bevorzugt 360 °C bis 450 °C aufweisen. Die Filamente werden dabei im Verhältnis 1:2,5 bis ca. 1:12, bevorzugt 1:4 bis 1:12 verstreckt.

Eine ebenfalls geeignete Variante des Spinnverfahrens ist das sog. "Trockendüsen-Naßspinnverfahren", wie es beispielsweise in der US-A-34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationsbad ein. Die weitere Behandlung der so erzeugten Fäden erfolgt wie oben beschrieben.

Die aus den erfindungsgemäßen Rohstoffen hergestellten Formkörper, wie z.B. Fasern, Filamente, Faserpulp oder Folien, dienen beispielsweise als Verstärkungsmaterialien für Kunststoffe bzw. als technische Materialien für Filtration und Isolation. Für Isolationszwecke ist es auch möglich, eine Polymerlösung auf den zu isolierenden Körper als Film aufzutragen und dann das Lösungsmittel und gegebenenfalls anwesende Lösungsvermittler zu entfernen.

Zur weiteren Verdeutlichung der Erfindung sollen die nachfolgenden Beispiele dienen. Die Anteile an Dicarbonsäurekomponenten und Diaminkomponenten wurden jeweils zu 100 Mol-% berechnet.

**Beispiel 1**

Aromatisches Copolyamid aus 100 Mol-% Terephthaloylchlorid, 65 Mol-% Dimethylbenzidin, 25 Mol-% p-Phenylendiamin und 10 Mol-% 1,4-Diamino-2-methylsulfonyl-benzol. 93,84 g (0,442 Mol) 3,3'-Dimethylbenzidin 18,36 g (0,17 Mol) p-Phenylendiamin und 12,67 g (0,068 Mol) 1,4-Diamino-2-methylsulfonylbenzol werden unter Stickstoff in 3974 g wasserfreiem N-Methylpyrrolidon gelöst und die Lösung auf 14 °C abgekühlt. Man setzt mit 139,4 g pulverisiertem Terephthaloylchlorid (0,687 Mol) um und läßt dabei die Temperatur auf 70 °C ansteigen. Nach 40 Min ist die gewünschte Viscosität erreicht. Man neutralisiert mit 62,9 g einer 65-prozentigen Suspension von Calziumoxid (96 prozentig) in N-Methylpyrrolidon.

Die Lösung enthält 5 Gew.% Copolyamid und 1,9 Gew.% Calziumchlorid. Die inhärente Viscosität des gelösten Polyamids beträgt 6,57 dl/g.

Die Lösung wird filtriert, entgast und nach einem Naßspinnverfahren versponnen. Dazu wird sie bei einer Temperatur von 100 °C durch eine im Fällbad waagrecht befindliche Düse mit 100 Öffnungen von je 0,15 mm Durchmesser in das Fällbad ausgepreßt und mit 16 m/Min abgezogen. Das Fällbad besteht aus einer 35-prozentigen wässrigen Lösung von N-Methylpyrrolidon von einer Temperatur von 60 °C.

Die erhaltenen Spinnfäden werden durch ein Wasserbad und eine mehrstufige Waschmaschine, über 3 Trockengaletten von 120, 160 und 240 °C und schließlich über ein vierteiliges Bügeleisen mit Oberflächentemperaturen von 350, 370 und 390 °C mit einer Geschwindigkeit von 69 m/Min abgezogen. Dabei wurde hier, wie in den folgenden Beispielen und Vergleichsbeispielen die Abzugsgeschwindigkeit so bemessen, daß sich für die Filamente ein Versteckverhältnis von 80 % des maximalen Verstreckverhältnisses ergab. Anschließend wird das Multifilamentgarn hier und in den folgenden Beispielen mit Schutzdrall entsprechend $\alpha_m = 30$ (DIN 53 832, Teil 1) versehen und anschließend geprüft. In Beispiel 1 beträgt der Einzelfilamenttiter 1,76 dtex (DIN 53 830), die feinheitsbezogenen Höchstzugkraft 163 cN/tex bei einer Höchstzugkraftdehnung von 2,0 % (DIN 53 834, Teil 1).

Der Anfangsmodul ist 89 N/tex. Er wird aus der Steigung des Kraft-Dehnungs-Diagramms zwischen 0,3 und 0,5 % Dehnung ermittelt.

**Beispiele 2 bis 9**

Analog Beispiel 1, jedoch unter den in Tabelle 1 angegebenen Reaktionsbedingungen und unter Einsatz der dort genannten Ausgangsmaterialien können weitere erfindungsgemäße aromatische Polyamide hergestellt werden.

Die so erhaltenen Polyamide mit unterschiedlichen Zusammensetzungen bezüglich der Diamin-Struktureinheiten B, C, D und E können anschließend analog Beispiel 1 direkt aus der Reaktionslösung versponnen und verstreckt werden.

Die Spinn- und Streckbedingungen sowie die Eigenschaften der so erhaltenen Filamente sind ebenfalls aus der Tabelle 1 ersichtlich.

In der Tabelle 1 werden folgende Abkürzungen verwendet:
TPC = Terephthaloylchlorid; PPD = p-Phenylendiamin; DMB = 3,3'-Dimethylbenzidin; DMOB = 3,3'-Dimethoxybenzidin; DABA = 4,4-Diaminobenzanilid; NMP = N-Methylpyrrolidon.

Die Sulfomethyl-Diamine I-III wurden weiter oben beschrieben. I ist 1,4-Diamino-2-methylsulfonylbenzol-II ist 4,4'-Diamino-2-methylsulfonyldiphenylether; III ist 4-Amino-benzoesäure-(4-amino-2-methylsulfonylanilid).

N = Naßspinnen; TN = Trocknen-Naßspinnen.

**Tabelle 1**

| Polymertype | | | A+B+C+D | | | | A+C+D+E | |
|---|---|---|---|---|---|---|---|---|
| Beispiel | | 2 | 3 | 4 | 5 | 6 | 7 | 8 |
| Polymer | | | | | | | | |
| Sulfon-Type | | I | I | II | III | I | I | I |
| | Mol | 0,1 | 0,6 | 0,068 | 0,152 | 0,076 | 0,095 | 0,20 |
| | Mol-% | 12,5 | 25 | 10 | 20 | 10 | 12,5 | 25 |
| | g | 18,6 | 111,7 | 18,9 | 46,4 | 14,15 | 17,7 | 37,2 |
| PPD | Mol | 0,22 | 0,6 | 0,17 | 0,228 | | | |
| | Mol-% | 27,5 | 25 | 25 | 30 | | | |
| | g | 23,8 | 64,9 | 18,4 | 24,6 | | | |
| DMB | Mol | 0,48 | 1,2 | 0,442 | | 0,456 | 0,38 | 0,4 |
| | Mol-% | 60 | 50 | 65 | | 60 | 50 | 50 |
| | g | 101,9 | 254,8 | 93,8 | | 96,8 | 80,7 | 84,9 |
| DMOB | Mol | | | | 0,38 | | | |
| | Mol-% | | | | 50 | | | |
| | g | | | | 92,8 | | | |
| DABA | Mol | | | | | 0,228 | 0,285 | 0,2 |
| | Mol-% | | | | | 30 | 37,5 | 25 |
| | g | | | | | 51,8 | 64,8 | 45,45 |
| $CaCl_2$ | g | | | 21,9 | 26,2 | | | |
| NMP | g | 3800 | 13851 | 4069 | 4503 | 4011 | 4017 | 4165 |
| TPC | g | 162,4 | 484,7 | 138,0 | 154,3 | 154,3 | 154,3 | 162,4 |
| Acetylchlorid | g | | 3,8 | | | | | |
| Reaktionszeit/Min | | 35 | 55 | 25 | 18 | 40 | 35 | 42 |

Fortsetzung der Tabelle 1

| Polymertype | | A+B+C+D | | | | A+C+D+E | |
|---|---|---|---|---|---|---|---|
| Beispiel | 2 | 3 | 4 | 5 | 6 | 7 | 8 |
| Reaktionstemp °C | 13,3-66 | 30,5-56,4 | 15-62 | 12-54 | 13-65 | 13-61 | 12,8-59 |
| CaO[1] g | 74,0 | 222 | 62,9 | 70,3 | 70,3 | 70,3 | 74,0 |
| Polymerkonz. % | 6 | 5 | 5 | 5,38 | 6 | 6 | 6 |
| Salzkonz. % | 2,15 | 1,79 | 2,22 | 2,27 | 1,94 | 1,93 | 1,94 |
| Polymerviskosität$_{inh}$ | 5,42 | 6,51 | 5,62 | 5,87 | 6,26 | 5,76 | 4,83 |
| **Spinnen und Strecken** | | | | | | | |
| Verfahren | TN | TN | N | TN | N | TN | N |
| Temp. Spinnlösung °C | 100 | 100 | 100 | 100 | 100 | 100 | 95 |
| Düsen Lochzahl | 100 | 100 | 100 | 100 | 100 | 100 | 100 |
| Düsen-Lochdurchmesser mm | 0,15 | 0,15 | 0,15 | 0,15 | 0.15 | 0.15 | 0,15 |
| Abstand Düse-Fällbad mm | 40 | 40 | / | 40 | / | 40 | / |
| Fällbadzusammensetzung; | | | | | | | |
| % NMP | 35 | 35 | 35 | 35 | 35 | 35 | 35 |
| Fällbad-Temperatur °C | 80 | 80 | 80 | 80 | 80 | 60 | 80 |
| Abzugsgeschwindigkeit m/min | 16 | 16 | 16 | 16 | 16 | 16 | 16 |

Fortsetzung der Tabelle 1

| Polymertype | | A+B+C+D | | | | A+C+D+E | |
|---|---|---|---|---|---|---|---|
| Beispiel | 2 | 3 | 4 | 5 | 6 | 7 | 8 |
| Trockengaletten-Temp. °C | 120 | 120 | 120 | 120 | 120 | 120 | 120 |
| | 240 | 240 | 140 | 160 | 160 | 160 | 160 |
| | | | 160 | 240 | 240 | 240 | 240 |
| Bügeleisen-Temp. °C | 360-400 | 330-370 | 350-390 | 380-410 | 360-390 | 400-420 | 340-380 |
| Abzugsgeschwindigk. m/min | 170,4 | 120,6 | 70,2 | 156,2 | 80,3 | 133,0 | 86,3 |
| **Filamenteigenschaften** | | | | | | | |
| Einzeltiter dtex | 2,00 | 1,82 | 1,79 | 1,24 | 1,93 | 2,29 | 1,85 |
| Feinheits-Festigk. cN/tex | 136 | 163 | 159 | 125 | 153 | 155 | 129 |
| Dehnung % | 1,9 | 2,7 | 2,6 | 2,6 | 2,0 | 2,1 | 1,9 |
| Anfangsmodul N/tex | 85 | 79 | 71 | 65 | 83 | 81 | 76 |

1) 65-prozentige Suspension von 96-prozentigem CaO in NMP

### Vergleichsbeispiele 1 und 2

Die folgenden Vergleichsversuche zeigen, daß Zusammensetzungen, die nicht den Ansprüchen entsprechen in ihren Eigenschaften stark abfallen, bzw. unbrauchbar sind. Das gilt für die Kombination

A + B + C + E (Vergleichsbeispiel 1), bei der bald Unlöslichkeit eintritt, ebenso wie für eine Zusammensetzung mit vier Diaminkomponenten (A + B + C + D + E-Vergleichsbeispiel 2).

In der Tabelle 2 werden die gleichen Abkürzungen verwendet wie in Tabelle 1

**Tabelle 2**

| Polymertype | | A+B+C+E | A+B+C+D+E |
|---|---|---|---|
| Vergleichsbeispiel | | 1 | 2 |
| **Polymer** | | | |
| Sulfon-Type | | I | I |
| | Mol | 0,9 | 0,48 |
| | Mol-% | 37,5 | 20 |
| | g | 167,6 | 89,4 |
| PPD | Mol | 0,6 | 0,48 |
| | Mol-% | 25 | 20 |
| | g | 64,9 | 51,9 |
| DMB | Mol | | 0,72 |
| | Mol-% | | 30 |
| | g | | 152,85 |
| DABA | Mol | 0,9 | 0,72 |
| | Mol-% | 37,5 | 30 |
| | g | 204,5 | 163,6 |
| $CaCl_2$ | g | 74,9 | / |
| NMP | g | 17630 | 14348 |
| TPC | g | 488,3 | 485,8 |
| Acetylchlorid | g | 3,8 | 3,8 |
| Reaktionszeit/Min | | 60 | 26 |
| Reaktionstemperatur °C | | 30-55,8 | 30,6-54,1 |
| CaO[1)] | | 222 | 222 |
| Polymerkonz. % | | 4 | 5 |
| Salzkonz.% | | 1,82 | 1,73 |
| Polymervisc. $_{inh}$ | | 5,10 | 5,37 |

Fortsetzung Tabelle 2

| Polymertype | A+B+C+E | A+B+C+D+E |
|---|---|---|
| Vergleichsbeispiel | 1 | 2 |
| **Spinnen und Strecken** | | |
| Verfahren | TN | N |
| Temp.-Spinnlösung °C | 100 | 123 |
| Düsen-Lochzahl | Faden extrem spröde. Ließ sich praktisch nicht verstrecken. Unbrauchbar | 100 |
| Düsen-Lochdurchmesser mm | | 0,10 |
| Abstand Düse-Fällbad mm | | / |
| Fällbadzusammensetzung; % NMP | | 35 |
| Fällbad-Temperatur °C | | 80 |
| Abzugsgeschwindigkeit m/min | | 16 |
| Trockengaletten-Temp. °C | | 120<br>240 |
| Bügeleisen-Temp. °C | | 410-450 |
| Abzugsgeschwindigkeit.m/min. | | 41,5 |
| **Filamenteigenschaften** | | |
| Einzeltiter dtex | | 0,83 |
| Feinheits-Festigk. cN/tex | | 95 |
| Dehnung % | | 1,5 |
| Anfangsmodul N/tex | | 75 |

1) 65-prozentige Suspension von 96-prozentigem CaO in NMP

**Patentansprüche**

1. Aromatische Copolyamide, löslich in organischen aprotischen polaren Amid-Lösungsmitteln, dadurch gekennzeichnet, daß sie zu mindestens 95 Mol-% die wiederkehrenden Sturktureinheiten
   - A: -OC-Ar-CO-
   - B: -NH-Ar'-NH-
   - C:

-HN-Ar''-NH-
|
$SO_2R$

D:

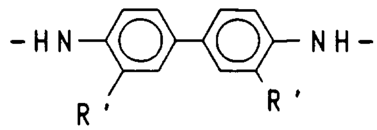

E:

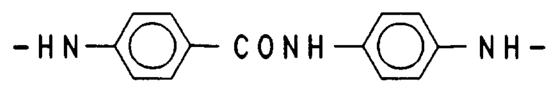

in den Kombinationen A + B + C + D oder A + C + D + E und gegebenenfalls bis zu 5 Mol-% m-Bindungen enthaltende, von aromatischen Dicarbonsäuren (F') und/oder von aromatischen Diaminen (G') abgeleiteten Struktureinheiten F und/oder G aufweisen, wobei die Summe der Molanteile der Struktureinheiten A + F und die Summe der Molanteile der Struktureinheiten aus B + C + D + E + G sich maximal um etwa 1 % unterscheiden,
-Ar- ein zweiwertiger aromatischer Rest ist, dessen C-N-Valenzbindungen in para- oder vergleichbarer koaxialer oder paralleler Stellung stehen und der durch einen oder zwei Alkylreste mit 1-4 C-Atomen oder durch Halogen substituiert sein kann,
-Ar'- ein zweiwertiger ein- oder zweikerniger kondensierter aromatischer Rest ist, dessen C-N-Valenzbindungen in para- oder vergleichbarer koaxialer oder paralleler Stellung stehen und der durch einen oder zwei Alkylreste mit 1-4 C-Atomen oder durch Halogen substituiert sein kann,

-Ar''-
|

ein dreiwertiger aromatischer Rest ist, dessen C-N-Valenzbindung in para- oder vergleichbarer koaxialer oder paralleler Stellung stehen und der durch einen oder zwei Alkylreste mit 1-4 C-Atomen oder Halogen substituiert sein kann, oder für die Struktureinheit

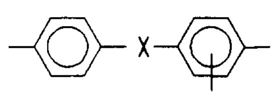 ,

mit X = -O-, -NHCO-, $-SO_2-$ oder -CO-, steht,
-R ein Alkylrest mit 1-4 C-Atomen ist,
-R' ein Alkylrest mit 1-4 C-Atomen oder Alkoxyrest mit 1-4 C-Atomen ist,
und die Anteile der Diaminkomponenten B, C, D und E innerhalb folgender Grenzen liegen:

B: 25-47,5 Mol-%
C: 7,5-30 Mol-%
D: 45-67,5 Mol-%
E: 20-40 Mol-%.

**2.** Copolyamide gemäß Anspruch 1, dadurch gekennzeichnet, daß die Anteile der Diaminkomponenten B, C, D und E innerhalb folgender Grenzen liegen:

B = 25-30 Mol-%

C = 10-25 Mol-%
D = 50-65 Mol-%
E = 25-37,5 Mol-%.

**3.** Copolyamide gemäß mindestens einem der Ansprüche 1 und 2, dadurch gekennzeichnet, daß -Ar- 1,4-Phenylen, 1,4-, 1,5- oder 2,6-Napthylen oder 1,4-Diphenylen und -Ar'- 1,4-Phenylen, 1,4-, 1,5- oder 2,6-Napthylen und -Ar"- 1,4-Phenylen,1,4-, 1,5- oder 2,6-Naphthylen oder der Rest

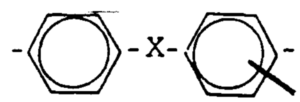

ist, wobei für X die Reste -O-, -NHCO-, $-SO_2-$ oder -CO-stehen und worin die Alkylsulfonylgruppe an einer beliebigen freien Position stehen kann.

**4.** Copolyamide gemäß mindestens einem der Ansprüche 1 bis 3, dadurch gekennzeichnet, daß R ein geradkettiger Alkylrest mit 1 bis 4 C-Atomen, bevorzugt aber Methyl, ist.

**5.** Copolyamide gemaß mindestens einem der Ansprüche 1 bis 4, dadurch gekennzeichnet, daß R' ein geradkettiger Alkylrest mit 1 bis 4 C-Atomen, bevorzugt Methyl, oder ein geradkettiger Alkoxyrest mit 1 bis 4 C-Atomen, bevorzugt Methoxy, ist.

**6.** Copolyamide gemäß mindestens einem der Ansprüche 1 bis 5, dadurch gekennzeichnet, daß die m-Bindungen enthaltenden Struktureinheiten F und G zweiwertige Reste von Isophthalsäure, m-Phenylendiamin, 3,4' oder 4,3'-Diaminobenzanilid oder 3,4'-Diaminodiphenylether sind.

**7.** Verfahren zur Herstellung der aromatische Copolyamide des Anspruchs 1, durch Polykondensation von Dicarbonsäurechloriden mit aromatischen Diaminen in einem bekannten Polyamid-Lösemittel, gegebenenfalls in Gegenwart eines Alkali- oder Erdalkalihalogenids bei erhöhter Temperatur, dadurch gekennzeichnet, daß man 95 bis 100 Mol% Dicarbonsäure-dichloride der Formel

Cl-OC-Ar-CO-Cl (A')

und 0 bis 5 Mol% m-Bindungen enthaltende aromatische Dicarbonsäure-dichloride (F') mit einer äquivalenten Menge einer Diaminmischung, die sich zusammensetzt aus 95-100 Mol% eines Gemisches von Diaminen, bestehend aus
25-47,5 Mol-%, von Diaminen der Formel

$H_2N-Ar'-NH_2$ (B')

7,5-30 Mol-% von Diaminen der Formel

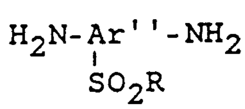

(C')

45-67,5 Mol-% von Diaminen der Formel

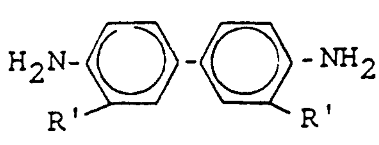

(D')

20-40 Mol-% von 4,4'-Diaminobenzanilid (E') und aus 0 bis 5 Mol-% von m-Bindungen enthaltenden aromatischen Diaminen (G') in der angegebenen Weise miteinander umsetzt.

**8.** Verfahren gemäß Anspruch 7, dadurch gekennzeichnet, daß das Gemisch der Diamine, mit dem man die Dicarbonsäuredichloride umsetzt, aus
25-30 Mol-% B
10-25 Mol-% C
50-65 Mol-% D und
25-37,5 Mol-% E
besteht.

**9.** Geformte Gebilde wie Fäden, Fasern, Faserpulp, Folien und Membrane aus aromatischen Copolyamiden des Dicarbonsäure-Diamin-Typs, dadurch gekennzeichnet daß das geformte Material ein aromatisches Copolyamid des Anspruchs 1 ist.

## Claims

**1.** Aromatic copolyamides which are soluble in organic aprotic polar amide solvents, characterized in that they contain at least 95 mol % of the structural repeat units
A: -OC-Ar-CO-
B: -NH-Ar'-NH-
C:

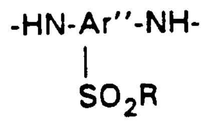

D:

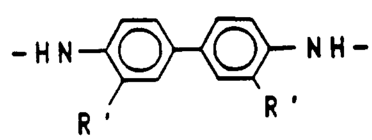

E:

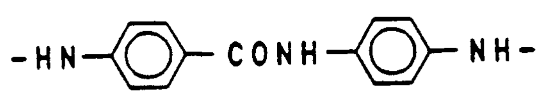

in the combinations A + B + C + D or A + C + D + E and optionally up to 5 mol % of m-bond-containing structural units F and/or G derived from aromatic dicarboxylic acids (F') and/or from aromatic diamines (G'), the sum total of the mole fractions of the structural units A + F and the sum total of the mole fractions of the structural units of B + C + D + E + G differing at most by about 1%,
-Ar- is a bivalent aromatic radical whose C-N valence bonds are in a para-position or in a comparable coaxial or parallel position and which may be substituted by one or two alkyl radicals of 1-4 carbon atoms or by halogen,
-Ar'- is a bivalent mono- or dinuclear fused aromatic radical whose C-N valence bonds are in a para-position or in a comparable coaxial or parallel position and which may be substituted by one or two alkyl radicals of 1-4 carbon atoms or by halogen,

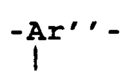

is a tervalent aromatic radical whose C-N valence bonds are in a para-position or in a comparable coaxial or parallel position and which may be substituted by one or two alkyl radicals of 1-4 carbon atoms or halogen, or else is the structural unit

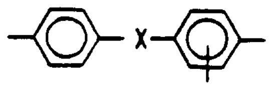

where X is -O-, -NHCO-, $-SO_2$-or -CO-,
-R is alkyl of 1-4 carbon atoms and
-R' is alkyl of 1-4 carbon atoms or alkoxy of 1-4 carbon atoms,
and the proportions of the diamine components B, C, D and E are within the following limits:

B: 25-47.5 mol %
C: 7.5-30 mol %
D: 45-67.5 mol %
E: 20-40 mol %.

**2.** Copolyamides as claimed in claim 1, characterized in that the proportions of the diamine components B, C, D and E are within the following limits:
B = 25-30 mol %
C = 10-25 mol %
D = 50-65 mol %
E = 25-37.5 mol %.

**3.** Copolyamide as claimed in at least one of claims 1 and 2, characterized in that
-Ar- is 1,4-phenylene, 1,4-, 1,5- or 2,6-naphthylene or 1,4-biphenylene and
-Ar'- is 1,4-phenylene, or 1,4-, 1,5- or 2,6-naphthylene, and
-Ar''- is 1,4-phenylene, 1,4-, 1,5- or 2,6-naphthylene or the radical

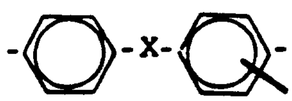

where X is -O-, -NHCO-, $-SO_2$- or -CO- and the alkylsulfonyl group may occupy any desired free position.

**4.** Copolyamides as claimed in at least one of claims 1 to 3, characterized in that R is straight-chain alkyl of 1 to 4 carbon atoms, but preferably methyl.

**5.** Copolyamide as claimed in at least one of claims 1 to 4, characterized in that R' is straight-chain alkyl of 1 to 4 carbon atoms, preferably methyl, or straight-chain alkoxy of 1 to 4 carbon atoms, preferably methoxy.

**6.** Copolyamides as claimed in at least one of claims 1 to 5, characterized in that the m-bond-containing structural units F and G are divalent radicals of isophthalic acid, m-phenylenediamine, 3,4'- or 4,3'-diaminobenzanilide or 3,4'-diaminodiphenyl ether.

**7.** A process for preparing the aromatic copolyamides of claim 1 by polycondensation of dicarbonyl chlorides with aromatic diamines in a known polyamide solvent at elevated temperature in the presence or absence of an alkali metal halide or of an alkaline earth metal halide, characterized in that from 95 to 100 mol % of dicarbonyl dichlorides of the formula

Cl-OC-Ar-CO-Cl (A')

and from O to 5 mol % of m-bond-containing aromatic dicarbonyl dichlorides (F') are reacted with an equivalent amount of a diamine mixture composed of 95-100 mol % of a mixture of diamines consisting

of 25-47.5 mol % of diamines of the formula

$H_2N\text{-}Ar'\text{-}NH_2$ (B')

7.5-30 mol % of diamines of the formula

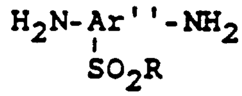

(C')

45-67.5 mol % of diamines of the formula

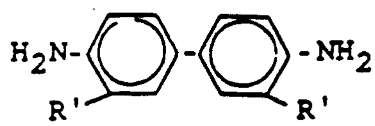

(D')

20-40 mol % of 4,4'-diaminobenzanilide (E') and of from 0 to 5 mol % of m-bond-containing aromatic diamines (G') in the stated manner.

**8.** The process of claim 7, characterized in that the mixture of diamines with which the dicarbonyl dichlorides are reacted consists of
25-30 mol % of B
10-25 mol % of C
50-65 mol % of D and
25-37.5 mol % of E.

**9.** Shaped structures such as filaments, fibers, fiberpulp, films and membranes formed from aromatic copolyamides of the dicarboxylic acid/diamine type, characterized in that the shaped material is an aromatic copolyamide of claim 1.

**Revendications**

**1.** Copolyamides aromatiques, solubles dans des solvants amides organiques aprotiques polaires, **caractérisé** en ce que ils contiennent au moins 95 % en mole des unités structurales récurantes.
A: -OC-Ar-CO-
B: -NH-Ar'-NH-
C:

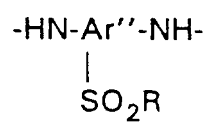

D:

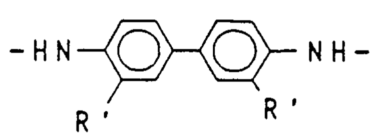

E:

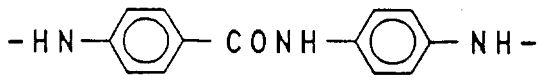

dans les combinaisons A + B + C + D ou A + C + D + E et éventuellement jusqu'à 5 % en mole d'unités structurales F et/ou G dérivant d'acides dicarboxyliques aromatiques (F') et/ou de diamines aromatiques (G'), contenant des liaisons méta, la somme des proportions en mole des unités structurales A + F et la somme des proportions en mole des unités structurales de B + C + D + E + G se différenciant au maximum de environ 1 %,

-Ar- est un reste aromatique divalent, dont les liaisons de valence C-N se trouvent en position para ou de manière comparable en position coaxiale ou parallèle et peut être substitué par un ou deux restes alkyle ayant de 1 à 4 atomes de carbone ou par des halogènes,

-Ar'- est un reste aromatique divalent, condensé de un ou deux noyaux, dont les liaisons de valence C-N se trouvent en position para ou de manière comparable en position coaxiale ou parallèle et qui peut être substitué par un ou deux restes alkyle ayant de 1 à 4 atomes de carbone ou par des halogènes,

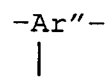

est un reste aromatique trivalent, dont les liaisons de valence C-N se trouvent en position para ou de manière comparable en position coaxiale ou parallèle et qui peut être substitué par un ou deux restes alkyle ayant de 1 à 4 atomes de carbone et par des halogènes, ou bien signifie l'unité structurale

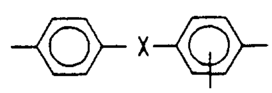

avec X = -O-, -NHCO-, $-SO_2-$ ou -CO-,

-R est un reste alkyle ayant de 1 à 4 atomes de carbone,

-R' est un reste alkyle ayant de 1 à 4 atomes de carbone ou un reste alkoxy ayant de 1 à 4 atomes de carbone,

et les proportions des composants diamines B, C, D et E se situent à l'intérieur des limites suivantes :

B : 25 à 47,5 % en mole
C : 7,5 à 30 % en mole
D : 45 à 67,5 % en mole
E : 20 à 40 % en mole.

2. Copolyamides selon la revendication 1, **caractérisés** en ce que la proportion des composés diamines B, C, D et E se situe à l'intérieur des limites suivantes :
B = 25 à 30 % en mole
C = 10 à 25 % en mole
D = 50 à 65 % en mole
E = 25 à 37,5 % en mole.

3. Copolyamides selon au moins l'une des revendications 1 et 2 **caractérisés** en ce que
-Ar- est le 1,4-phénylène, le 1,4-, le 1,5- ou le 2,6-naphtylène ou le 1,4-diphénylène et
-Ar'- est le 1,4-phénylène, le 1,4-, le 1,5- ou le 2,6-naphtylène et
-Ar''- est le 1,4-phénylène, le 1,4-, le 1,5- ou le 2,6-naphtylène ou le reste

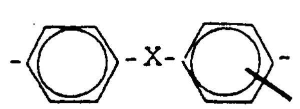

X signifiant les restes -O-, -NHCO-, $-SO_2-$ ou -CO- et dans lequel le groupe alkylsulfonyle peut se trouver dans une position libre quelconque.

4. Copolyamides selon au moins l'une des revendications 1 à 3, **caractérisés** en ce que R est un reste alkyle à chaîne droite ayant de 1 à 4 atomes de carbone, mais de préférence le méthyle.

5. Copolyamides selon au moins l'une des revendications 1 à 4, **caractérisés** en ce que R' est un reste alkyle à chaîne droite ayant de 1 à 4 atomes de carbone, de préférence le méthyle, ou un reste alkoxy à chaîne droite ayant de 1 à 4 atomes de carbone, de préférence le méthoxy.

6. Copolyamides selon au moins l'une des revendications 1 à 5, **caractérisés** en ce que les unités structurales F et G contenant des liaisons méta sont des restes divalents de l'acide isophtalique, de la m-phénylènediamine, du 3,4' ou 4,3'-diaminobenzanilide ou du 3,4'-diaminodiphényléther.

7. Procédé de préparation des copolyamides aromatiques selon la revendication 1, par polycondensation de chlorures d'acides dicarboxyliques avec des diamines aromatiques dans un solvant de polyamide connu, éventuellement en présence d'un halogénure alcalin ou alcalino-terreux à une température élevée, **caractérisé** en ce qu'on met en réaction 95 à 100 % en mole de dichlorure d'acide dicarboxylique de formule

Cl-OC-Ar-CO-Cl (A')

et 0 à 5 % en mole de dichlorure d'acide dicarboxylique aromatique (F') contenant des liaisons en méta avec une quantité équivalente d'un mélange de diamines qui se compose de 95 à 100 % en mole d'un mélange de diamines, constitué par 25 à 47,5 % en mole de diamines de formule

$H_2N-Ar'-NH_2$ (B,)

de 7,5 à 30 % en mole de diamines de formule

$$\begin{array}{c} H_2N-Ar''-NH_2 \\ | \\ SO_2R \end{array} \qquad (C')$$

de 45 à 67,5 % en mole de diamines de formule

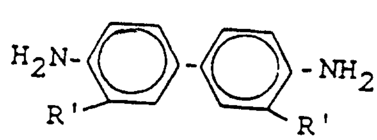

(D')

de 20 à 40 % en mole de 4,4'-diaminobenzanilide (E') et de 0 à 5 % en mole de diamines aromatiques (G') contenant des liaisons méta, ceci ensemble selon la méthode donnée.

8. Procédé selon la revendication 7, **caractérisé** en ce que le mélange de diamines avec lequel on fait réagir le dichlorure d'acide dicarboxylique, consiste en
   25 à 30 % en mole de B
   10 à 25 % en mole de C
   50 à 65 % en mole de D et
   25 à 37,5 % en mole de E.

9. Produit façonné tels que des fils, des fibres, des pulpes de fibres, des feuilles et des membranes en copolyamide aromatique de type acide dicarboxylique-diamine, **caractérisé** en ce que le matériau façonné est un copolyamide aromatique selon la revendication 1.